(19) Europäisches Patentamt
European Patent Office
Office européen des brevets

(11) Veröffentlichungsnummer: **0 168 566**
**B1**

(12) **EUROPÄISCHE PATENTSCHRIFT**

(45) Veröffentlichungstag der Patentschrift: **24.08.88**

(51) Int. Cl.[4]: **C 08 L 1/04** // (C08L71/04, 9:06),(C08L71/04, 21:00)

(21) Anmeldenummer: **85105304.1**

(22) Anmeldetag: **02.05.85**

(54) **Thermoplastische Massen auf Basis von Polyphenylenethern, schlagfesten Styrolpolymerisaten und pulverförmigem, füllstoffhaltigen Kautschuk sowie Verfahren zu ihrer Herstellung.**

(30) Priorität: **30.06.84 DE 3424219**

(43) Veröffentlichungstag der Anmeldung: **22.01.86 Patentblatt 86/4**

(45) Bekanntmachung des Hinweises auf die Patenterteilung: **24.08.88 Patentblatt 88/34**

(84) Benannte Vertragsstaaten: **AT BE DE FR GB IT NL SE**

(56) Entgegenhaltungen:
**DE - A - 3 246 443**
**FR - A - 2 426 061**

**PATENTS ABSTRACTS OF JAPAN, Band 7, Nr. 11 (C-145)[1156], 18. Januar, 1983; & JP - A - 57 168938 (MITSUBISHI YUKA K.K.) 18.10.1982**
**CHEMICAL ABSTRACTS, Band 82, 1975, Seite 35, Nr. 73928m, Columbus, Ohio, US; & JP - A - 74 85 144 (SUMITOMO CHEMICAL CO., LTD.) 15.08.1974**

(73) Patentinhaber: **HÜLS AKTIENGESELLSCHAFT, - RSP Patente / PB 15 - Postfach 13 20, D-4370 Marl 1 (DE)**

(72) Erfinder: **Feinauer, Roland, Dr., Flämingstrasse 34, D-4370 Marl (DE)**
Erfinder: **Jadamus, Hans, Dr., Hervester Strasse 8, D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Thermoplastische Massen, die sich zur Herstellung von Formteilen eignen und die schlagzäh modifizierte Styrolpolymerisate und Polyphenylenether enthalten, sind erstmalig in der deutschen Patentschrift DE-PS 16 94 257 beschrieben worden. Vorzugsweise liegt der Anteil der fein verteilten elastomeren Gelphase im kautschukmodifizierten Polystyrol über etwa 22 Gewichtsprozent (DE-PS 22 11 005).

Die in der DE-PS 21 19 301 beanspruchten thermoplastischen Massen bestehen aus Polyphenylenethern mit einem kautschukmodifizierten Polystyrol und/oder einem Polystyrol und einem Kautschuk.

Für Massen, bei denen der mittlere Teilchendurchmesser der dispergierten elastomeren Phase unter maximal etwa 2 µm liegt, werden höhere Schlagzähigkeiten geltend gemacht.

Von geringerer technischer Bedeutung sind dagegen die in der DE-PS 16 94 255 genannten Formmassen auf Basis von Polyphenylenethern und Polybutadienen. Dies dürfte daran liegen, dass beide Komponenten nicht wie im Falle des Polystyrols unbegrenzt miteinander mischbar sind.

Es ist bekannt, dass man Polymermischungen zur Verbesserung ihrer physikalischen Eigenschaften Füllstoffe, wie z.B. Metalle, Titandioxid, Asbest, Glasfasern, Calcium- und Aluminiumsilikate (DE-OSS 27 13 462, 27 52 383 und 28 40 111), zusetzen kann. Mit Aluminiumflokken, Kohlenstoffasern und Russ lässt sich eine elektrische Abschirmwirkung der aus den Massen erhaltenen Formkörper erzielen.

Die füllstoffhaltigen thermoplastischen Massen werden hergestellt, indem man die Bestandteile, den Polyphenylenether, das Styrolharz und den Füllstoff, durchmischt, die erhaltene geschmolzene Vormischung zu einem Strang extrudiert und diesen zu einem Granulat zerschneidet (vgl. DE-OS 27 13 462).

Von erheblicher wirtschaftlicher Bedeutung sind Polymermischungen auf Basis von Polyphenylenethern, die sich durch ein bestimmtes Mass an Kerbschlagzähigkeit und Wärmeformbeständigkeit auszeichnen. Im Prinzip lassen sich derartige Mischungen aus Polyphenylenethern und schlagfesten Styrolpolymerisaten mit unterschiedlichen Kautschukgehalten herstellen. Dieser Weg ist aber aufwendig, da zahlreiche Polystyroltypen bereit gehalten werden müssen, um die jeweils gewünschten Qualitäten einstellen zu können. Es wäre einfacher, könnte man die unterschiedlichen Typen durch Abmischen von wenigen Ausgangskomponenten herstellen.

Eine Möglichkeit bestünde darin, von einem schlagfesten Styrolpolymerisat mit hohem Kautschukanteil auszugehen und dieses, je nach Wunsch, mit Polystyrol zu verdünnen.

Günstiger wäre es, wenn man umgekehrt von einem schlagfesten Styrolpolymerisat mit niedrigem Kautschukanteil ausgehen könnte, da dieses nicht nur leichter zugänglich, sondern auch erheblich billiger ist.

Eine nachträgliche Einarbeitung von Kautschuk in Polystyrol ist zwar technisch möglich, doch ist zu berücksichtigen, dass der Kautschuk, der üblicherweise in Ballenform vorliegt, schwer handhabbar ist. Darüber hinaus weisen die aus solchen Polymermischungen erhaltenen Formteile bei gleichen Kautschukanteilen niedrigere Kerbschlagzähigkeitswerte auf, als sie bei schlagfesten Styrolpolymerisaten erzielt werden (vgl. DE-PS 21 19 301, Spalte 2, Zeile 51 ff.). Gerade dies sollte aber vermieden werden.

Die DE-OS 32 46 443 offenbart eine Zusammensetzung aus

– der Matrix eines Polyphenylenethers (PPE) oder der Mischung eines PPE und eines Polymeren auf Styrolbasis

– dispergiert in dieser Matrix ein synthetisches Harz, das im wesentlichen einen feinteiligen anorganischen Füllstoff vollständig umhüllt.

Das synthetische Harz kann aus

i) einer kristallinen Olefinpolymerphase und einem hydrierten Styrolkonj. Dien-Polymer (zwischen Matrix und kristalline Polymerphase) oder

ii) einer kristallinen, hydrierten Styrol-konj. Dien-Polymerphase bestehen.

Die kristalline hydrierte Styrol-konj. Dien-Polymerphase umfasst

– ein funktionelles Derivat eines hydrierten Styrol-konj. Dien-Polymers mit funktionellen Gruppen.

– eine Mischung dieses funktionellen Polymeren mit einem underivatisierten kristallinen, hydrierten Styrol-konj. Dien-Polymeren.

Die kristalline Olefinpolymerphase umfasst

– ein funktionelles Derivat eines kristallinen Olefinpolymeren,

– eine Mischung aus diesem funktionellen Polymeren mit einem underivatisierten kristallinen Olefinpolymeren.

Die Erfindung der DE-OS 32 46 443 beruht auf der Idee, dass es erforderlich ist, Polymere mit funktionellen Gruppen einzusetzen, die eine Affinität zwischen Füllstoff und Harz herstellen. Wenn man nämlich das in Beispiel 1 der DE-OS 32 46 443 verwendete Maleinsäureanhydrid-modifizierte Polypropylen durch unmodifiziertes Polypropylen ersetzt (siehe Vergleichsbeispiel 1 (b), so geht der Füllstoff nicht in die disperse Phase, sondern in die Matrix, und es werden keine hohen Schlagfestigkeitswerte erreicht. Die Zusammensetzung der DE-OS 32 46 443 kann nur in sehr aufwendiger Weise hergestellt werden. Dies gilt insbesondere für das Harz, das den Füllstoff umgibt. Es gibt offensichtlich Affinitätsprobleme zwischen Harz und Füllstoff, sodass die zusätzliche Verwendung von funktionellen Derivaten erforderlich ist.

Grundsätzlich könnte man nun auch daran denken, Kautschuk in Pulverform einzusetzen, der unterschiedliche Mengen an Füllstoffen enthält.

In der einschlägigen Literatur sind indessen keine Beispiele bekannt, wonach derartige Kautschuke mit Polyphenylenethern und schlagfesten Styrolpolymerisaten zu Polymermischungen verarbeitet werden könnten. Es ist lediglich bekannt, dass pulverförmige füllstoffhaltige Kautschuke auch bestimmte Anteile von Thermoplasten, wie Polyvinylchlorid, Polystyrol oder Polymethylmethacrylat, enthalten können (vgl. DE-PS 16 94 918), aber diese Schrift vermag dem Fachmann keine konkrete Anregung zu vermitteln, zumal sich das in dieser Schrift beschriebene Verfahren in der Praxis nicht hat durchsetzen können.

Versuche der Anmelderin zeigen weiterhin, dass pulverförmige füllstoffhaltige Kautschuke auf Basis von Naturkautschuk in Abmischungen mit Polyphenylenethern und schlagfesten Styrolpolymerisaten Formmassen mit erheblich verringerter Kerbschlagzähigkeit ergeben (siehe Vergleichsversuche B und C). Mit pulverförmigen Kautschuken auf Basis von Polybutadien wurden gleichfalls unbefriedigende Ergebnisse erhalten. Es schien daher wenig aussichtsreich, Polymermischungen aus Polyphenylenethern, Styrolharzen und pulverförmigem füllstoffhaltigen Kautschuk herzustellen.

Ziel der vorliegenden Erfindung war es, Polymermischungen hoher Wärmeformbeständigkeit und einstellbarer Schlagzähigkeit auf Basis von Polyphenylenethern, schlagfesten Styrolpolymerisaten, Füllstoffen und gegebenenfalls weiteren Zusatzstoffen zu erhalten.

Es wurde jetzt gefunden, dass es möglich ist, Polyphenylenether mit schlagfesten Styrolpolymerisaten und pulverförmigen füllstoffhaltigen SBR-Kautschuk zu verarbeiten. Der SBR-Kautschuk enthält 15 bis 40 Gewichtsprozent Styrol und 85 bis 60 Gewichtsprozent Butadien. Er weist eine Mooney-Viskosität zwischen 40 und 120 auf.

Untersuchungen zeigen, dass beispielsweise der Russ bei der Einarbeitung nicht diffus in der Polystyrolphase verteilt wird. Vielmehr bildet sich offensichtlich neben der Polystyrolphase und der darin fein verteilten elastomeren Phase eine weitere Phase von mit Russ verstärkten Kautschukteilchen aus (siehe Abb. 1). Dies ist überraschend und mag die Ursache dafür sein, dass sich die erhaltenen Formteile durch erstaunlich hohe Wärmeformbeständigkeit bei gleichzeitig hoher Schlagzähigkeit auszeichnen.

Gegenstand der Erfindung sind die in den Ansprüchen 1 bis 13 beschriebenen thermoplastischen Massen sowie die Verfahren nach den Ansprüchen 14 und 15.

Es ergeben sich somit folgende Vorteile:

1. Es können gezielt Polymermischungen eingestellt werden, deren Formmassen eine vorgegebene Wärmeformbeständigkeit und Schlagzähigkeit aufweisen. Dies wird durch alleinige Veränderung des Mischungsverhältnisses Polyphenylenether/schlagfestes Styrolpolymerisat/pulverförmiger füllstoffhaltiger Kautschuk erreicht.

2. Der Ersatz von schlagfesten Styrolpolymerisaten durch pulverförmigen füllstoffhaltigen Kautschuk führt nicht, wie man erwartet hätte, zu einer Verringerung der Wärmeformbeständigkeit. Man erhält bessere Kerbschlagzähigkeiten (vgl. Beispiele 4 und 5 mit A).

3. Der Zusatz von pulverförmigem füllstoffhaltigen Kautschuk führt zu einer Erhöhung der Kerbschlagzähigkeit (vgl. Versuche 6 und 7 mit D).

Unter thermoplastischen Massen sollen im Rahmen dieser Erfindung ungeformte Mischungen angesehen werden, die sich durch thermoplastische Verarbeitung innerhalb bestimmter Temperaturbereiche zu Formteilen oder zu Halbzeug verarbeiten lassen. Die thermoplastischen Massen können beispielsweise als Granulat vorliegen, sie können aber auch pulverförmig sein oder in Form von Platten und Bahnen vorliegen.

Als Polyphenylenether kommen Polyether auf Basis von diorthosubstituierten Phenolen infrage, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein α-ständiges tertiäres Kohlenstoffatom besitzen, Halogenkohlenwasserstoffe und Phenylreste tragen. So kommen infrage: Poly(2,6-dichlor-1,4-phenylen)ether, Poly (2,6-diphenyl- 1,4-phenylen)-ether, Poly(2,6-dimethyl- 1,4-phenylen)ether, Poly(2,6-dibrom-1,4-phenylen)ether. Vorzugsweise wird der Poly(2,6-dimethyl-1,4-phenylen)-ether eingesetzt, insbesondere ein solcher mit einer Grenzviskosität von 0,40 bis 0,65 dl/g (gemessen in Chloroform bei 25 °C).

Die Polyphenylenether können z.B. in Gegenwart von komplexbildenden Mitteln, wie Kupferbromid und Morpholin, aus den Phenolen hergestellt werden (vgl. DE-OS 32 24 692 und 58932 24 691).

Als Bestandteile der schlagfesten Styrolpolymerisate werden die üblicherweise für die Schlagfestmodifizierung von Styrolpolymerisaten gebräuchlichen natürlichen oder synthetischen Kautschuke eingesetzt. Geeignete Kautschuke in diesem Sinne sind neben Naturkautschuk synthetische Kautschukarten, wie z. B. Polybutadien, Polyisopren und elastomere Mischpolymerisate des Butadiens und/oder Isoprens mit Styrol und anderen Comonomeren. Ferner kommen auch sogenannte Ethylen-Propylen-Kautschuke (gesättigt oder ungesättigt) und Butadien-Styrol-Block-Copolymerisate (Zweiblock als auch Dreiblockcopolymerisate) in Betracht. Schliesslich können auch Mischungen dieser Polymerisate eingesetzt werden. Der Kautschukanteil im schlagfesten Styrolpolymerisat liegt zwischen 5 und 10%.

Die schlagfesten Styrolpolymerisate werden in an sich bekannter Weise erhalten, indem styrolische Kautschuklösungen üblicherweise in Masse, in Lösung oder in wässriger Dispersion oder auch nach dem sogenannten gemischten Verfahren polymerisiert werden. Bei dem zuletzt genannten Verfahren wird die styrolische Kautschuklösung in Masse vorpolymerisiert und in wässriger Dispersion zu Ende polymerisiert (siehe beispielsweise US-PSS 2 694 692 und 2 862 906).

Das Styrol kann ganz oder teilweise durch ein kern- oder seitenkettenalkyliertes Styrol ersetzt werden. Anstelle von Styrol kann man auch teilweise andere Comonomere, wie Acrylester, verwenden.

Als schlagfeste Styrolpolymerisate können auch Gemische der genannten Pfropfcopolymerisate oder auch Gemische mit unmodifiziertem Polystyrol verwendet werden.

Die Einstellung der Teilchengrösse der Weichphase erfolgt in an sich bekannter Weise in der Stufe der Vorpolymerisation vor der sogenannten Phasenumkehr. Gegebenenfalls kann auch in Gegenwart der bekannten Kettenregler und/oder radikalischer Initiatoren gearbeitet werden. Einzelheiten, wie z. B. der Zusammenhang zwischen der Rührgeschwindigkeit und der Grösse und Verteilung der Kautschukteilchen im resultierenden schlagfesten Polymerisat sind dem Fachmann bekannt (siehe z. B. Freeguard Brit. Polym. J. 6, 203–228, (1974).

Der Durchmesser der Teilchen in der elastomeren Gelphase liegt üblicherweise unter 10 µm, vorzugsweise unter 3,5 µm. Der mittlere Durchmesser (Volumenmittel) liegt im Bereich zwischen 1 und 5 µm. Hierbei sind jedoch die Teilchen nicht berücksichtigt, deren Durchmesser entweder unter 0,5 µm oder über 10 µm liegt.

Die mittlere Teilchengrösse (Volumenanteil) wird bestimmt durch Ausmessen und Mitteln der Durchmesser von flächengleichen Kreisen (Äquivalentdurchmesser) der Teilchen aus elektronenmikroskopischen Dünnschicht-Aufnahmen.

Mit den Volumina der Teilchen (3. Potenz des Äquivalentdurchmessers) wird die Verteilungskurve und daraus das Volumenmittel errechnet. Für die Auswertung sollen mindestens 2000 Teilchen herangezogen werden.

Man verwendet einen pulverförmigen, füllstoffhaltigen Kautschuk, der in der Regel auch nach Lagerung noch rieselfähig ist. Der mittlere Durchmesser der Teilchen (Volumenmittel) soll unter 1 mm liegen, andererseits sollen die Teilchen vorzugsweise nicht so klein sein, dass es bei Mischungsvorgängen zu starker Staubentwicklung kommt. Die Mooney-Viskosität des Polymerbestandteils des pulverförmigen, füllstoffhaltigen Kautschuks ML (1+4) 100 °C liegt zwischen 40 und 120.

Im Rahmen dieser Erfindung verwendet man einen Kautschuk auf Basis von Styrol und Butadien. Vorzugsweise handelt es sich um einen Kautschuk, der durch Polymerisation in Emulsion hergestellt wurde und kurz als E-SBR-Kautschuk bezeichnet wird. Er enthält 15 bis 40, vorzugsweise 20 bis 25 Gewichtsprozent Styrol und entsprechend 85 bis 60 Gewichtsprozent Butadien. Der Massenanteil des pulverförmigen, füllstoffhaltigen Kautschuks in den thermoplastischen Massen liegt zwischen 0,5 und 50; vorzugsweise zwischen 5 und 10%.

Es gibt eine Reihe unterschiedlicher Verfahren zur Herstellung derartiger Kautschuke. Viele Prozesse sind jedoch so langwierig und umständlich, dass sie keine praktische Bedeutung erlangt haben. In jüngster Zeit wurde erstmalig ein Verfahren in die industrielle Praxis überführt, das in der DE-OS 28 22 148 beschrieben ist. Dieses Verfahren zeichnet sich dadurch aus, dass man die Kautschukkomponente in gelöster Form mit einer wässrigen Füllstoff-Suspension vereinigt, die ein wasserlösliches Aluminiumsalz und Wasserglas enthält. Entscheidend ist, dass nicht nur die wässrige Füllstoff-Dispersion einen pH-Wert von 3,0 bis 3,7 aufweisen soll, sondern dass man bei der Vereinigung dieser Dispersion mit der Kautschukkomponente soviel Mineralsäure zusetzen soll, dass in der erhaltenen Mischung ebenfalls dieser pH-Bereich eingehalten wird.

Als Füllstoffe des Kautschuks kommen insbesondere Silikate, vorzugsweise aber Kieselsäure und Russ, infrage. Auch Mischungen von Füllstoffen sind möglich. Es empfiehlt sich, die Kieselsäure in geeigneter Weise zu hydrophobieren, um die Einarbeitung in das unpolare Polymermaterial zu erleichtern. Bezüglich weiterer Einzelheiten wird auf die DE-OS 28 22 148 verwiesen. Der Massenanteil des Füllstoffs im eingesetzten pulverförmigen, füllstoffhaltigen SBR-Kautschuk liegt zwischen 10 und 80, vorzugsweise zwischen 30 und 60%.

Pulverförmige, füllstoffhaltige Kautschuke, die nach dem Verfahren der DE-OS 28 22 148 hergestellt wurden, werden im Rahmen dieser Erfindung bevorzugt eingesetzt.

Die erfindungsgemässen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Sie enthalten, jedoch keine weiteren Füllstoffe. Der Anteil der Verstärkungsmittel kann bis zu 50%, der der Flammschutzmittel bis zu 15% und der aller übrigen Zusatzstoffe insgesamt bis zu 5%, jeweils bezogen auf die gesamte Formmasse, betragen.

Als Flammschutz kommen aromatische Phosphorverbindungen der allgemeinen Formel

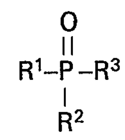

infrage, worin $R^1$, $R^2$ und $R^3$ gleich oder verschieden sein können und Aryl, Alkyl, Cycloalkyl, alkylsubstituierter Aryl, halogensubstituierter Aryl, arylsubstituierter Alkyl, Halogen, Wasserstoff, die entsprechenden Aryloxy-, Alkyloxy-, Cycloalkyloxy-Reste und deren Kombinationen sind, wobei mindestens ein Rest ein Aryl- oder Aryloxy-Rest ist und die Gesamtzahl der C-Atomen von $R^1$, $R^2$ und $R^3$ insgesamt 30 nicht überschreitet, wie beispielsweise Triphenylphosphinoxid, Phenylbisdodecylphosphat, Phenylbisneopentylphosphat, Phenylethylenhydrogenphosphat, Phenyl-bis (3, 5, 5'-trimethylhexylphosphat), Ethyldiphenylphosphat, 2-Ethyl-hexyldi(p-tolyl)phosphat, Diphenylhydrogenphosphat, Bis(2-ethylhexyl)p-tolylphosphat, Tritolylphosphat, Bis(2-ethylhexyl)phenylphosphat, Phenylmethylhydrogenphosphat, Di(dodecyl)p-tolylphosphat, Tricresylphosphat, Triphenylphosphat, Dibutylphenylphosphat, 2-Chlorethyldiphenylphosphat, p-Tolyl-bis(2, 5, 5'-trimethylhexyl)phosphat, 2-Ethylhexyldiphenylphosphat und Diphenylhydrogenphosphat.

Besonders geeignet sind Phosphorverbindungen, bei denen jedes R ein Aryloxy- oder ein Aryl-Rest ist, wie Triphenylphosphinoxid und Triphenylphosphat.

Man kann auch ein übliches halogenhaltiges Flammschutzmittel verwenden. Infrage kommen dabei Halogen enthaltende organische Verbindungen, wie sie z. B. in der Monographie von H. Vogel «Flammenfestmachen von Kunststoff», Hüthing-Verlag, 1966, auf den Seiten 94 bis 102 beschrieben wird. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glasfasern und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe.

Man stellt die Formmassen wie üblich auf Vorrichtungen her, die ein homogenes Mischen der Komponenten zulassen, wie Kneter, Extruder oder Walzenmischgeräte. Bei diesem Vorgang wird der pulverförmige, füllstoffhaltige Kautschuk in der Polymermatrix dispergiert. Bevorzugt sind kontinuierliche Kneter, wie z. B. Doppelschneckenkneter.

Man kann die Formmassen entweder direkt aus Polyphenylenethern, schlagfesten Styrolpolymerisaten und pulverförmigem, füllstoffhaltigen Kautschuk herstellen. Man kann aber auch von einer Schmelzmischung (PPE+HIPS) ausgehen und diese dann mit weiteren schlagfesten Styrolpolymerisaten und pulverförmigem, füllstoffhaltigen Kautschuk umschmelzen. Diese Arbeitsweise hat den Vorteil, dass man die günstige Darstellungsweise der Schmelzmischungen aus Polyphenylenethern und schlagfesten Styrolpolymerisaten ausnutzen kann (vgl. DE-OS 33 37 629 sowie DE-OS 31 31 440). Vorzugsweise versetzt man eine Schmelze aus Polyphenylenethern und schlagfesten Styrolpolymerisaten bei 200 bis 300 °C mit dem pulverförmigen, füllstoffhaltigen Kautschuk und den sonstigen Zusatzstoffen.

Die erfindungsgemässen Massen lassen sich nach den für die Thermoplastverarbeitung üblichen Verfahren, wie z. B. Extrusion und Spritzgiessen, zu Formteilen und Halbzeug verarbeiten, die beispielsweise im Automobil-, Elektro- oder Feinwerksektor Anwendung finden.

I Herstellung der Komponenten

Beispiel 1.1

Einen Polyphenylenether mit einem J-Wert von 55 g/ml (bestimmt in Chloroform nach DIN 53 728) erhielt man durch oxidative Kupplung von 2,6-Dimethylphenol. Abstoppung der Reaktion und anschliessender Reaktionsextraktion gemäss DE-OS 33 13 864 und DE-OS 33 32 377. Gemäss deutscher Patentanmeldung P 33 37 629.8 wurde eine Mischung von Polyphenylenether und kautschukmodifiziertem Polystyrol (siehe Beispiel 2.1) im Massenverhältnis 55:45 hergestellt.

Beispiel 2.1

Als schlagfestes Styrolpolymerisat wird VESTYRON® 616 der Fa. Chemische Werke Hüls AG, D-4370 Marl, eingesetzt. Die Kenndaten dieses Produkts sind in der Broschüre «Kunststoffe von Hüls, VESTYRON®», Ausgabe September 1979, angegeben.

Beispiel 3.1

Ein pulverförmiger Naturkautschuk, der 31,5 Gewichtsprozent Kieselsäure enthielt, wurde gemäss DE-OS 28 22 148 erhalten.

Beispiel 3.2

Ein pulverförmiger E-SBR-Kautschuk (auf Basis von 23,5% Styrol und 76,5% Butadien), der 41% Russ enthielt, wurde gemäss DE-OS 28 22 148 erhalten.

II Herstellung und Prüfung der Polymermischungen

Alle Mischungen enthielten je 100 Massenteile der Summe von Polyphenylenether, schlagfestes Styrolpolymerisat und folgende Zusatzstoffe:

0,5 Massenteile Didecylphenylphosphit

0,5 Massenteile Octadecyl-3-(3,5-di-tert.-butyl-4-hydroxyphenyl)-propionat

1,5 Massenteile VESTOWAX® AO 1539

VESTOWAX® AO 1539 ist ein Produkt der Chemische Werke Hüls AG, D-4370 Marl. Es handelt sich um ein Wachs mit Molekulargewicht 1 500, das durch Oxidation von Polyethylen erhalten wird.

Für die Fertigung der schlagzähen polymeren Mischungen benutzte man einen ZSK 30 Doppelschneckenkneter der Firma Werner und Pfleiderer mit Förder-, Knet- und Entgasungszonen.

Die Bestandteile wurden mechanisch gemischt und in dem genannten Gerät umgeschmolzen, wobei einheitlich eine Zylindertemperatur von 230 °C und eine Schneckendrehzahl von $250/min^{-1}$ verwendet wurde.

Die austretenden Schmelzstränge wurden nach üblichem Verfahren granuliert. Man trocknete sie bei 110 °C bis zu einer Feuchte von weniger als 0,05%.

Für die Bestimmung der Kerbschlagzähigkeit nach DIN 53 453 verarbeitet man das Granulat auf einer Spritzgussmaschine bei einer Zylindertemperatur von 240 bis 260 °C und einer Werkzeugtemperatur von 90 °C zu Normkleinstäben.

Die Vicat-Erweichungstemperatur nach DIN 53 460 bestimmte man an 4 mm dicken Pressplatten, die man bei 250 °C hergestellt hatte.

Tabelle

Kerbschlagzähigkeit und Wärmeformbeständigkeit der Polymermischungen

| Bsp. | Komponenten gemäss den Beispielen | Massenverhältnis PPE/HIPS/K | Kerbschlagzähigkeit nach DIN 53 453 in $mJ/mm^2$ | Vicat-Erweichungstemperatur nach DIN 53 460 in °C | |
|---|---|---|---|---|---|
| | | | | A | B |
| 4 | 1.1+2.1+3.2 | 34/61/5 | 12,3 | 130 | 121 |
| 5 | 1.1+2.1+3.2 | 34/56/10 | 14,0 | 131 | 122 |
| A | 1.1+2.1 | 34/66/0 | 10,7 | 128 | 120 |
| B | 1.1+2.1+3.1 | 34/61/5 | 7,5 | 129 | 123 |
| C | 1.1+2.1+3.1 | 34/56/10 | 8,0 | 133 | 124 |
| 6 | 1.1+2.1+3.2 | 55/45/5 | 12,4 | 146 | 139 |
| 7 | 1.1+2.1+3.2 | 55/45/10 | 14,4 | 146 | 139 |
| D | 1.1+2.1 | 55/45/0 | 10,6 | 146 | 139 |

**Patentansprüche**

1. Thermoplastische Formmassen aus Gemischen von Polyphenylenethern, schlagfesten Styrolpolymerisaten, Füllstoffen und gegebenenfalls weiteren Zusatzstoffen, dadurch gekennzeichnet, dass die Gemische Polyphenylenether, schlagfeste Styrolpolymerisate und einen pulverförmigen, füllstoffhaltigen SBR-Kautschuk, jedoch keine weiteren Füllstoffe enthalten, wobei der SBR-Kautschuk 15 bis 40 Gewichtsprozent Styrol und 85 bis 60 Gewichtsprozent Butadien enthält und eine Mooney-Viskosität zwischen 40 und 120 aufweist.

2. Thermoplastische Massen nach Anspruch 1, dadurch gekennzeichnet, dass der pulverförmige, füllstoffhaltige Kautschuk dadurch hergestellt wird, dass man

a) die Kautschukkomponente in gelöster Form mit der wässrigen Füllstoff-Suspension, die ein wasserlösliches Aluminiumsalz und Wasserglas enthält und einen pH-Wert von 3,0 bis 3,7 aufweist, vereinigt und

b) bei dieser Vereinigung durch Zugabe von Mineralsäure darauf achtet, dass auch in der erhaltenen Mischung stets ein pH-Wert von 3,0 bis 3,7 eingehalten wird.

3. Thermoplastische Massen nach Anspruch 1 oder 2, dadurch gekennzeichnet, dass dem pulverförmigen, füllstoffhaltigen Kautschuk ein E-SBR-Kautschuk zugrunde liegt.

4. Thermoplastische Massen nach den Ansprüchen 1 bis 3, dadurch gekennzeichnet, dass der Massenanteil des pulverförmigen, füllstoffhaltigen SBR-Kautschuks in den thermoplastischen Massen 0,5 bis 50%, vorzugsweise 5 bis 10%, beträgt.

5. Thermoplastische Massen nach den Ansprüchen 1 bis 4, dadurch gekennzeichnet, dass der Kautschukanteil des pulverförmigen, füllstoffhaltigen SBR-Kautschuks zu 20 bis 25% aus polymerisierten Styroleinheiten und der Rest aus polymerisierten Butadieneinheiten besteht.

6. Thermoplastische Massen nach den Ansprüchen 1 bis 5, dadurch gekennzeichnet, dass der pulverförmige SBR-Kautschuk als Füllstoff Russ enthält.

7. Thermoplastische Massen nach den Ansprüchen 1 bis 5, dadurch gekennzeichnet, dass der pulverförmige SBR-Kautschuk als Füllstoff Kieselsäure enthält.

8. Thermoplastische Massen nach den Ansprüchen 6 und/oder 7, dadurch gekennzeichnet, dass der Anteil des Füllstoffs im eingesetzten pulverförmigen, füllstoffhaltigen SBR-Kautschuk zwischen 10 und 80, vorzugsweise zwischen 30 und 60 Massenprozent liegt.

9. Thermoplastische Massen nach den Ansprüchen 1 bis 8, dadurch gekennzeichnet, dass der Kautschukanteil im schlagfesten Styrolpolymerisat zwischen 5 und 10% liegt.

10. Thermoplastische Massen nach den Ansprüchen 1 bis 9, dadurch gekennzeichnet, dass der Durchmesser der Teilchen in der elastomeren Gelphase des eingesetzten schlagfesten Styrolpolymerisats unter 10 µm, vorzugsweise unter 3,5 µm, liegt.

11. Thermoplastische Massen nach Anspruch 10, dadurch gekennzeichnet, dass das Volumenmittel der Teilchen mit einem Durchmesser zwischen 0,5 µm und 10 µm in dem Bereich zwischen 1 und 5 µm liegt.

12. Thermoplastische Massen nach den Ansprüchen 1 bis 11, dadurch gekennzeichnet, dass

diese Massen bis zu 50% eines Verstärkungsmittels und bis zu 15% eines Flammschutzmittels, jeweils bezogen auf die gesamte Formmasse, enthalten.

13. Thermoplastische Massen nach Anspruch 12, dadurch gekennzeichnet, dass diese Massen weitere Zusatzstoffe in Mengen bis zu insgesamt 5%, bezogen auf die gesamte Formmasse, enthalten.

14. Verfahren zur Herstellung der thermoplastischen Massen nach den Ansprüchen 1 bis 13, dadurch gekennzeichnet, dass man die Komponenten

– Polyphenylenether,
– schlagfeste Styrolpolymerisate,
– pulverförmiger, füllstoffhaltiger SBR-Kautschuk
– und gegebenenfalls Verstärkungsmittel, Flammschutzmittel und weitere Zusatzstoffe vermischt und in einem Kneter umschmilzt.

15. Verfahren zur Herstellung der thermoplastischen Massen nach den Ansprüchen 1 bis 13, dadurch gekennzeichnet, dass eine Schmelze aus Polyphenylenethern und schlagfesten Styrolpolymerisaten bei 200 bis 300 °C mit dem pulverförmigen, füllstoffhaltigen Kautschuk und den sonstigen Zusatzstoffen versetzt wird.

**Revendications**

1. Masses à mouler thermoplastiques obtenues à partir de mélanges d'éthers polyphényléniques, de produits de polymérisation du styrène résistant au choc, de charges et, éventuellement d'autres additifs, caractérisées par le fait que les mélanges renferment des éthers polyphényléniques, des produits de polymérisation du styrène résistant au choc et un caoutchouc SBR pulvérulent renfermant une charge, mais pas d'autres charges, le caoutchouc SBR renfermant de 15 à 40% en poids de styrène et de 85 à 60% en poids de butadiène et présentant une viscosité Mooney comprise entre 40 et 120.

2. Masses à mouler thermoplastiques selon la revendication 1, caractérisées par le fait que le caoutchouc pulvérulent renfermant une charge est préparé

a) en réunissant le composant de caoutchouc sous forme dissoute avec la suspension aqueuse de la charge qui renferme un sel d'aluminium soluble dans l'eau et du verre soluble, et qui présente un pH d'une valeur de 3,0 à 3,7, et

b) en veillant, lors de cette réunion, par addition d'acide minéral, à maintenir constamment aussi dans le mélange obtenu un pH d'une valeur de 3,0 à 3,7.

3. Masses thermoplastiques selon la revendication 1 ou 2, caractérisées par le fait qu'un caoutchouc E-SBR est à la base du caoutchouc pulvérulent renfermant une charge.

4. Masses thermoplastiques selon les revendications 1 à 3, caractérisées par le fait que le pourcentage en masse, dans les masses thermoplastiques, du caoutchouc SBR pulvérulent renfermant une charge est de 0,5 à 50%, de préférence de 5 à 10%.

5. Masses thermoplastiques selon les revendications 1 à 4, caractérisées par le fait que la fraction caoutchouteuse du caoutchouc SBR pulvérulent renfermant une charge est constituée pour 20 à 25% par des unités styrène polymérisées et le reste par des unités butadiène polymérisées.

6. Masses thermoplastiques selon les revendications 1 à 5, caractérisées par le fait que le caoutchouc SBR pulvérulent renferme comme charge de la suie.

7. Masses thermoplastiques selon les revendications 1 à 5, caractérisées par le fait que le caoutchouc SBR pulvérulent renferme comme charge de l'acide silicique.

8. Masses thermoplastiques selon les revendications 6 et/ou 7, caractérisées par le fait que la fraction de la charge, que le caoutchouc SBR pulvérulent utilisé renferme, est comprise entre 10 et 80, de préférence entre 30 et 60% en masse.

9. Masses thermoplastiques selon les revendications 1 à 8, caractérisées par le fait que la fraction de caoutchouc dans le produit de polymérisation du styrène résistant au choc est comprise entre 5 et 10%.

10. Masses thermoplastiques selon les revendications 1 à 9, caractérisées par le fait que le diamètre des particules dans la phase élastomère gélifiée du produit de polymérisation du styrène résistant au choc qui est utilisé est inférieur à 10 µm, de préférence inférieur à 3,5 µm.

11. Masses thermoplastiques selon la revendication 10, caractérisées par le fait que la moyenne volumique des particules d'un diamètre compris entre 0,5 µm et 10 µm se situe dans un domaine compris entre 1 et 5 µm.

12. Masses thermoplastiques selon les revendications 1 à 11, caractérisées par le fait que les masses renferment jusqu'à 50% d'un agent de renforcement et jusqu'à 15% d'un agent ignifugeant, chaque fois relativement à la masse à mouler globale.

13. Masses thermoplastiques selon la revendication 12, caractérisées par le fait que ces masses renferment d'autres additifs dans des quantités allant jusqu'à 5% au total, relativement à la masse à mouler globale.

14. Procédé de préparation des masses thermoplastiques selon les revendications 1 à 13, caractérisé par le fait que l'on mélange les composants, à savoir:

l'éther polyphénylénique,

les produits de polymérisation du styrène résistant au choc,

le caoutchouc SBR pulvérulent renfermant une charge, et le cas échéant

des agents de renforcement, des agents ignifugeants et d'autres additifs, et qu'on les fait fondre dans un malaxeur.

15. Procédé de préparation des masses thermoplastiques selon les revendications 1 à 13, caractérisé par le fait qu'à une masse fondue formée d'éthers polyphényléniques et de produits de polymérisation du styrène résistant au choc, on ajoute, à une température de 200 à 300 °C, le

caoutchouc pulvérulent renfermant une charge et les autres additifs.

**Claims**

1. A thermoplastic moulding composition composed of a blend of polyphenylene ethers, high-impact styrene polymers, fillers and optionally further additives, characterized in that the blend contains polyphenylene ethers, high-impact styrene polymers and a pulverulent filled SBR rubber but no further fillers, the SBR rubber containing 15 to 40 per cent by weight of styrene and 85 to 60 per cent by weight of butadiene and having a Mooney viscosity of between 40 and 120.

2. A thermoplastic composition according to claim 1, characterized in that the pulverulent filled rubber is prepared by

a) combining the rubber component, in dissolved form, with the aqueous filler suspension which contains a watersoluble aluminium salt and water glass and has a pH value of 3.0 to 3.7, and

b) during this combination ensuring, by addition of mineral acid, that a pH value of 3.0 to 3.7 is also maintained at all times in the mixture obtained.

3. A thermoplastic composition according to claim 1 or 2, characterized in that the pulverulent filled rubber is based on a E-SBR rubber.

4. A thermoplastic composition according to any of claims 1 to 3, characterized in that the proportion by mass of the pulverulent filled SBR rubber in the thermoplastic composition is 0.5 to 50%, preferably 5 to 10%.

5. A thermoplastic composition according to any of claims 1 to 4, characterized in that the rubber component of the pulverulent filled SBR rubber consists to the extent of 20 to 25% of polymerized styrene units, the remainder consisting of polymerized butadiene units.

6. A thermoplastic composition according to any of claims 1 to 5, characterized in that the pulverulent SBR rubber contains carbon black as the filler.

7. A thermoplastic composition according to any of claims 1 to 5, characterized in that the pulverulent SBR rubber contains silica as the filler.

8. A thermoplastic composition according to claims 6 and/or 7, characterized in that the filler content in the pulverulent filled SBR rubber employed is between 10 and 80, preferably between 30 and 60, per cent by mass.

9. A thermoplastic composition according to any of claims 1 to 8, characterized in that proportion of rubber in the high-impact styrene polymer is between 5 and 10%.

10. A thermoplastic composition according to any of claims 1 to 9, characterized in that the diameter of particles in the elastomeric gel phase of the high-impact styrene polymer employed is less than 10 µm, preferably less than 3.5 µm.

11. A thermoplastic composition according to claim 10, characterized in that the volume-average of the particles of diameter between 0.5 µm and 10 µm is in the range between 1 and 5 µm.

12. A thermoplastic composition according to any of claims 1 to 11, characterized in that these compositions contain up to 50% of a reinforcing agent and up to 15% of a flame-proofing agent, in each case relative to the total moulding composition.

13. A thermoplastic composition according to claim 12, characterized in that this composition contains further additives in amounts of up to a total of 5%, relative to the total moulding composition.

14. A process for the preparation of the thermoplastic composition according to any of claims 1 to 13, characterized in that the following components:

polyphenylene ether,
high-impact styrene polymers,
pulverulent, filled SBR rubber and, optionally,
reinforcing agents, flameproofing agents and further additives, are mixed and remelted in a kneader.

15. A process for the preparation of the thermoplastic composition according to any of claims 1 to 13, characterized in that the pulverulent filled rubber and the other additives are added to a melt of polyphenylene ethers and high-impact styrene polymers at 200 to 300 °C.

1/1

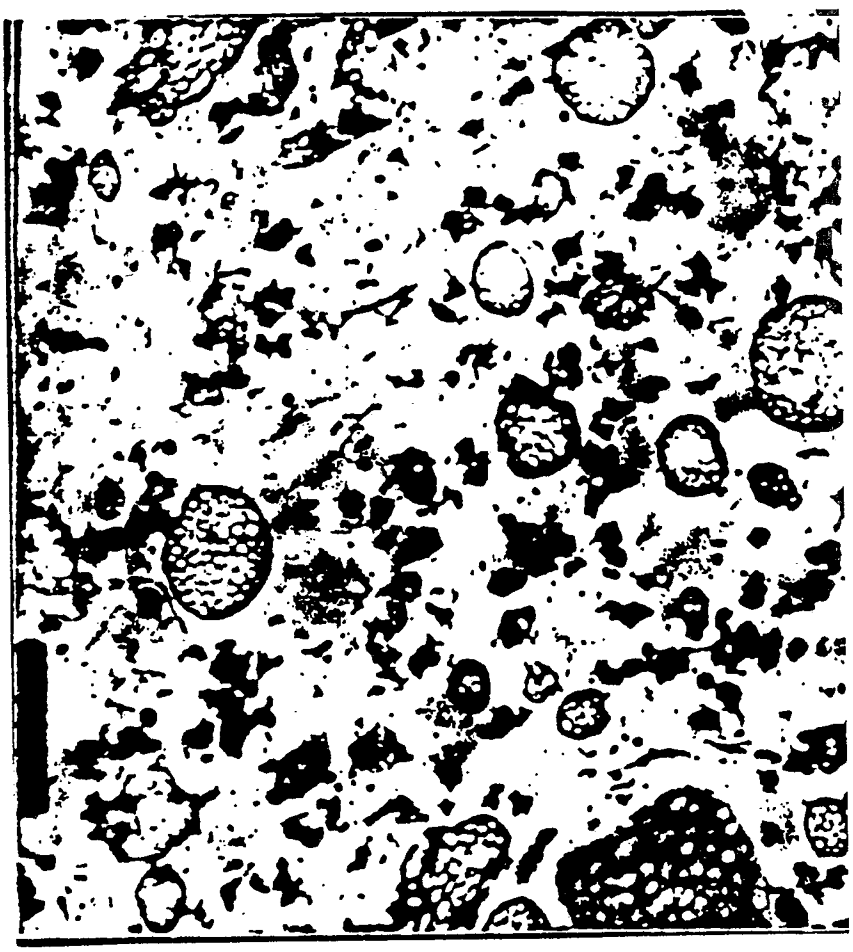



4 900fache Vergrößerung eines Dünnschnitts (D:cke
masse, die gemäß Beispiel 5 erhalten wurde. (Die
Hilfe eines Transmissionselektronenmikroskops ge